Europäisches Patentamt

European Patent Office

Office européen des brevets

(11) Publication number: **0 280 442 B1**

## EUROPEAN PATENT SPECIFICATION

(45) Date of publication of patent specification: **15.04.92**    (51) Int. Cl.⁵: **B60C 9/18**, B60C 9/20

(21) Application number: **88301148.8**

(22) Date of filing: **11.02.88**

(54) **Vehicle tyre.**

(30) Priority: **19.02.87 JP 37472/87**

(43) Date of publication of application:
**31.08.88 Bulletin 88/35**

(45) Publication of the grant of the patent:
**15.04.92 Bulletin 92/16**

(84) Designated Contracting States:
**DE FR GB**

(56) References cited:
**EP-A- 0 016 686        EP-A- 0 133 876**
**EP-A- 0 173 101        DE-A- 2 046 262**
**DE-A- 3 045 765        FR-A- 2 351 810**
**GB-A- 2 002 699**

(73) Proprietor: **SUMITOMO RUBBER INDUSTRIES LIMITED**
**No. 1-1, Tsutsui-cho 1-chome**
**Chuo-ku Kobe-shi Hyogo 651(JP)**

(72) Inventor: **Fujuwara, Kenichi**
**27.-6-303 Nishi Jiyuugaoka 2-chome**
**Shijimicho**
**Miki-shi Hyogo-ken(JP)**
Inventor: **Fukumoto, Takahiro**
**15-3 Maikozaka 3-chome Tarumi-ku**
**Kobe-shi Hyogo-ken(JP)**

(74) Representative: **Stewart, Charles Geoffrey**
**SP TYRES UK LIMITED Tyre Technical Division**
**Fort Dunlop Birmingham B24 9OT(GB)**

## Description

The present invention relates to a vehicle tyre, and more particularly to a pneumatic tyre having a breaker between a tread and a carcass.

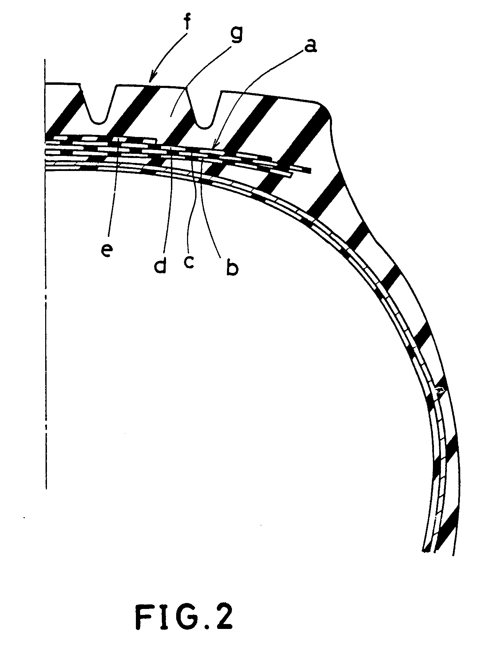

There is widely used a vehicle tyre having a rigid breaker composed of a plurality of plies of cords. In general, as shown in Fig.2, the plies (b), (c) (d) and (e) of such a breaker (a) are arranged closely to one other and the cords of each ply cross the cords of the next adjacent ply to form a triangulated construction. Accordingly, the rigidity of the breaker is maximised and the cornering force of the tyre is increased.

In the meantime, the rubber layer between the tread surface (f) and the breaker (a), that is the tread rubber (g) is compressed and deformed when the tyre comes under a load. Accordingly, the greater the thickness of the tread rubber (g), the greater the deformation, and the greater the deformation, the better the ride of the vehicle but on the other hand, the larger the deformation, the greater is the rolling resistance of the tyre. It is known that 25 to 35% of the rolling resistance under normal running is caused by the internal energy loss due to the repeated deformation of the tread rubber (g).

Thus it is seen that to improve the ride and to decrease the rolling resistance are in an antinomy. However, it has been proposed to satisfy the above objects in the Japanese Gazette TOKKYO KOHO No. 61-28521. There to decrease the rolling resistance of the tyre and to maintain good ride at the same time the widest ply of the breaker is positioned more closely to the tread rubber rather than the carcass. Also in the Japanese Gazette KOKAI No. 61-57408 it is proposed to decrease the rolling resistance of a tyre by positioning a low heat generating rubber between the belt layers of steel cords.

Also, there is disclosed in EP-A-0016686 a tyre having an intermediate rubber layer disposed between a first belt layer and a second belt layer according to the preamble of Claim 1.

However, the above mentioned TOKKYO KOHO No 61-28521, involves a problem because a large compression stress is produced in the sidewall parts of the tyre when the inner pressure of the tyre is increased, and consequently the ride becomes worse.

On the other hand, the latter proposed KOKAI No. 61-57408, involves a problem because damage to the tread rubber is liable to reach the top belt ply because it is arranged close to the tread surface and so the durability of the tyre is decreased severely by the resultant rust on the steel cords of the top belt caused by water penetrating through the resultant cracks.

It is therefore a general object of the present invention to provide a vehicle tyre in which the rolling resistance is decreased at no sacrifice in ride quality without the need to position the widest ply of the breaker close to the tread rubber.

Another object of the present invention is to provide a vehicle tyre wherein durability of the breaker is improved by preventing the breaker cords from being corroded.

A further object of the present invention is to provide a vehicle tyre of which the weight and the axial moment of inertia are decreased.

According to the invention, a vehicle tyre comprises a pair of bead cores disposed one in each bead of the tyre, a carcass extending between the beads, each end of which is turned up around each bead core, a tread disposed on the carcass, and a breaker disposed between the carcass and the tread and comprising a first belt layer, a second belt layer disposed radially outside the first belt layer, and an intermediate rubber disposed between the first belt layer and the second belt layer, the first belt layer comprises a plurality of plies of substantially inextensible cords, the second belt layer comprises at least one ply of substantially inextensible organic cords made of aromatic polyamide fibres characterised in that the intermediate rubber has a complex elasticity modulus ( $|E^*|$ ) of 20 to 150 kg/cm$^2$ and a loss compliance (E''/ $|E^*|^2$ ) of 0.4 to 2.0 x10$^{-3}$ cm$^2$/ kg, both measured under the following conditions: 10% initial strain; 10 Hz sine wave with 2% amplitude; and at a temperature of 60 degrees C.

The thickness of the intermediate rubber is preferably within 4% to 20% of the thickness of the tread part of the tyre at the tyre equator.

An embodiment of the present invention will now be described, by way of example only, in conjunction with the attached drawings in which:-

Fig.1. is a right-half cross sectional view showing an embodiment of the present invention; and

Fig.2. is a right-half cross sectional view showing an example of a conventional tyre.

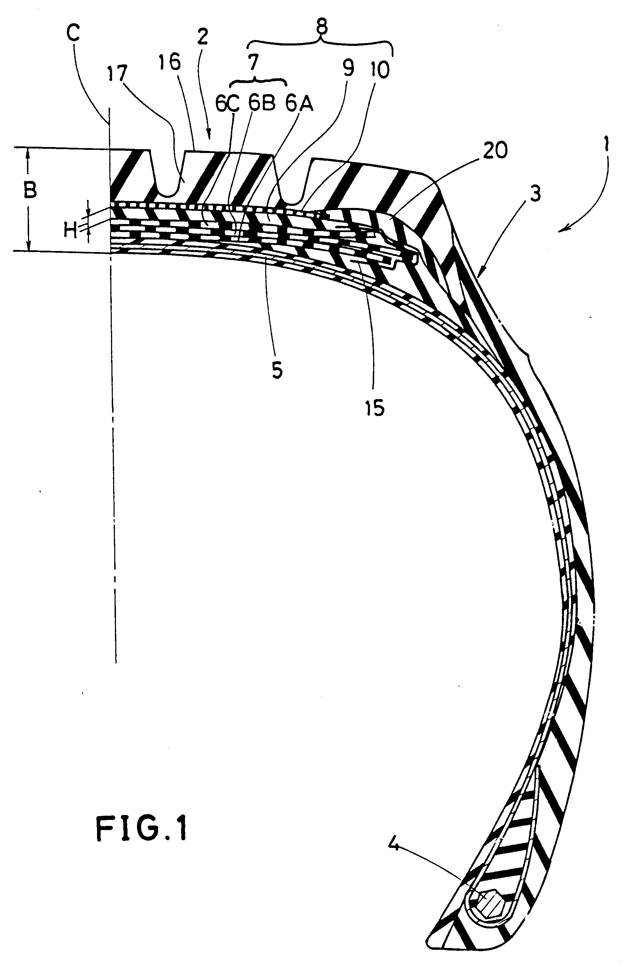

In Fig.1. the vehicle tyre 1 comprises a pair of bead cores 4 disposed in beads of the tyre 1, a carcass 5 extending between the beads through a tread 2 and two sidewall regions 3. A rubber tread 17 is positioned on the carcass 5 reinforced by a breaker 8 between the carcass 5 and the rubber tread 17.

The carcass 5 has, in this example, one ply of radially arranged cords, with each end thereof turned up around one of the bead cores 4 from the inside to the outside in the axial direction of the tyre. The cords of the carcass ply are made of organic fibre such as nylon, polyester, rayon aromatic polyamide or the like, or of steel cords. The breaker 8 comprises a first belt layer 7, a second belt layer 10, and an intermediate rubber 9 therebetween.

The first belt layer 7 comprises a plurality of plies 6 of substantially inextensible cords. In this example, there are three plies of metal (steel) cords the first ply 6A, the second ply 6B and the third ply 6C being arranged radially outwardly on the carcass crown in that order. Instead of steel cords organic cords such as rayon cords may be used as the breaker ply cords. The cords of each ply are inclined with respect to the equatorial plane C of the tyre to cross the cords of each adjacent ply, thereby forming a triangulated, reinforced construction. The axial widths of the plies 6A, 6B and 6C are such that the second ply 6B is wider than the first ply 6A and the third ply 6C is narrower than the first ply 6A. Furthermore, the plies 6 are preferably flared or spaced apart at both edges as shown in Fig.1.

The above mentioned second belt layer 10 is disposed radially outside the first belt layer 7 and comprises one ply of substantially inextensible organic cords.

For such inextensible high strength cords, aromatic polyamide (or polyaramid such as KEVLAR) fibre cords are used. The cords of the second belt layer ply are arranged at a small angle to the equatorial plane C of the tyre. The width of the second layer 10 is less than that of the outermost ply of the first belt layer 7, that is, the third ply 6C.

The intermediate rubber 9 disposed between the first belt layer 7 and the second belt layer 10 is of higher hardness and lower hysteresis than the rubber of the tread 17.

The hardness of the intermediate rubber 9 is in the range of 50 degrees to 70 degrees shore A and more preferably 55 degrees to 60 degrees. If it is less than 50 degrees the stress of the rubber by compression becomes too large and the second belt layer 10 is liable to separate therefrom. To the contrary when the hardness is more than 70 degrees the rigidity of the tread part 2 of the tyre is increased so that the ride becomes worse.

Furthermore, the intermediate rubber 9 should have a low heat generation property and so the complex elasticity modulus($|E^*|$) thereof is in the range of 20 to 150 kg/cm$^2$ and more preferably 40 to 70 kg/cm$^2$, and its loss compliance ($E''/|E^*|^2$) is in the range of $0.4 \times 10^{-3}$ to $2.0 \times 10^{-3}$ cm$^2$/kg and more preferably $0.6 \times 10^{-3}$ to $0.8 \times 10^{-3}$ cm$^2$/kg when measured with a visco elasticity spectrometer of IWAMOTO make under the following conditions 10% initial strain, 10 HZ sine wave with 2% amplitude, and at a temperature of 60 degrees C. If it is less than 20 kg/cm$^2$ the rigidity of the breaker is decreased too much and produces deterioration of handling stability. If, on the other hand, ($|E^*|$) is more than 150 kg/cm$^2$, the ride becomes worse because of too much rigidity in the breaker. On the other hand, when the loss compliances, is less than $0.4 \times 10^{-3}$ cm$^2$/kg the damping capacity is made too small with an evil effect on the ride. However, when more than $2.0 \times 10^{-3}$ cm$^2$/kg the hysteresis loss becomes too large and the heat generation increases. As a result the durability of the tyre in high speed running is lowered.

The intermediate rubber is substantially constant in width around the tyre and has a substantially constant thickness H. The thickness H is in the range of 4% to 20% and more preferably 6% to 15% of the thickness B of the tread part 2 of the tyre. When H is more than 20% the tread rubber thickness is inevitably smaller and the result of this is a decrease in durability. On the contrary, when H is less than 4% the compressive rigidity of the tread part 2 is decreased and accordingly the deformation becomes larger and the rolling resistance is not decreased sufficiently.

Furthermore, the breaker 8 includes a rubber reinforcing layer 15 which is folded around and covers each end of the first belt layer 7, that is, the ends of the first, second and third plies 6A, 6b and 6C. Also the rubber tread 17 includes base rubbers 20 one at each side, which are disposed radially outside the breaker ends over the first belt layer edge and the second belt layer edge. The base rubbers 20 have a low heat generation property, and these section are nearly triangular. Accordingly, the base rubbers 20 prevent heat separation of the second belt layer ends.

As described above, in this invention the intermediate rubber 9 is inserted between the first belt layer 7 and the second belt layer 10, and this insertion makes the tread rubber 17 thinner whereby the compressive rigidity of the tread 17 which affects rolling resistance is increased, but as a whole the compressive rigidity of the tread part 2 which affects ride comfort is maintained by the addition of the intermediate rubber 9.

As a result, the resultant rolling resistance of the tyre is decreased whilst maintaining the ride comfort. Therefore, fuel consumption of the vehicle is reduced. In this way the present invention solves the first mentioned antinomy.

Furthermore, in this invention, the second belt layer 10 which is the radially outermost reinforcement is made of inextensible and high strength organic cords which being non metallic will not corrode, even if water is infiltrated through a damaged part of the tread 17. Therefore the durability of the breaker 8 and the complete tyre is maximised.

For such organic cords, there are used aromatic polyamide fibre cords such as KEVLAR which is lighter but stronger than steel. Accordingly, the breaker 8 is increased in strength but its total weight is decreased, and further this weight reduction is achieved at its radially outermost part. Accordingly, cut resistance of the tread part 2 is increased, and the axial moment of inertia of the tyre is effectively decreased and the rotational response of the tyre is improved.

Test tyres were made and comparative tests were conducted for their rolling resistance, ride comfort, and durability by using a drum tester.

The test tyres included the above mentioned embodiment of the present invention as Working Example 1, Comparative Example 1 according to the above mentioned prior art shown in Fig.2, and Comparative Example 2 having identical construction except for the material of the second belt layer. The particulars of each test tyre are set in Table 1.

TABLE 1

|  | Invention Ex.1 | Comparative Ex.1 | Ex.2 |
|---|---|---|---|
| Tyre Construction | Fig.1 | Fig.2 | Fig.1 |
| Tyre Size | 10.00R20 14PR | | |
| Tread Pattern | five rib pattern | | |
| Breaker: | | | |
| First belt layer: | | | |
| No. of ply | 3 | 4 | 3 |
| Second belt layer: | | | |
| No. of ply | 1 | 0 | 1 |
| Material | polyaramide | --- | steel |
| Intermediate rubber: | | | |
| Thickness [1] (mm) | 4.2 | --- | 4.2 |
| Shore-A hardness ( $^\circ$ ) | 60 | --- | 60 |
| Complex elasticity modulus: | | | |
| $E^\bullet$ (kg/cm$^2$) | 55 | --- | 55 |
| $E''/\lvert E^\bullet \rvert^2$ (X10$^{-3}$ cm$^2$/kg$^\lambda$) | 0.7 | --- | 0.7 |
| Tread rubber: | | | |
| Thickness [2] (mm) | 16.2 | 18.1 | 16.2 |
| Test Results: | | | |
| Rolling resistance [3] | 110 | 100 | 112 |
| Ride comfort [4] | 100 | 100 | 100 |
| Endurance durability [5] | 150 | 100 | 90 |

Note

(1) - (2) measured at the tyre equator

(3) - (5) Index based on the assumption that Comparative Ex.1 was regard as 100. The larger the index, the better the performance.

(3) Test conditions: Load 2425 kgf, inner pressure 7.25 kgf/cm$^2$ , Rim size 7.00T X 20.

(4) Mean value of he counter force in up-down and from-rear directions, which is acted on the tyre axis when the tyre rides across a projection provided on the drum tester.

Test conditions: Load 2425 kgf, inner pressure 7.25 kgf/cm$^2$, Speed range 60 - 30 km/h, Rim size 7.00T × 20. Each test tyre was provided in its tread groove with a constant width cut that reached to breaker (second belt layer), and the cut part of the tyre was submerged in water for 24 hours. After that the tyre was continuously driven on the drum tester under the following extraordinary conditions until damage took place in the breaker. Test conditions: Load 9200 kgf, inner pressure 10.0 kgf/cm$^2$, Speed 20 km/h.

**Claims**

1. A vehicle tyre comprising a pair of bead cores (4) disposed one in each bead of the tyre, a carcass (5) extending between the beads, each end of which is turned up around each bead core, a tread (17) disposed on the carcass, and a breaker (8) disposed between the carcass and the tread and comprising a first belt layer (7), a second belt layer (10) disposed radially outside the first belt layer, and an intermediate rubber (9) disposed between the first belt layer and the second belt layer, the first belt layer (7) comprises a plurality of plies (6) of substantially inextensible cords, the second belt layer 10) comprises at least one ply of substantially inextensible organic cords made of aromatic polyamide fibres characterised in that the intermediate rubber (9) has a complex elasticity modulus ($|E^*|$) of 20 to 150 kg/cm$^2$ and a loss compliance ($E''/|E^*|^2$) of 0.4 to 2.0 x$10^{-3}$ cm$^2$/kg, both measured under the following conditions: 10% initial strain; 10 Hz sine wave with 2% amplitude; and at a temperature of 60 degrees C.

2. A tyre according to claim 1 characterised in that the thickness (H) of the intermediate rubber (9) is within 4% to 20% of the thickness (B) of the tread part (2) of the tyre at the tyre equator (C).

3. A tyre according to claim 1 or 2, characterised in that the Shore-A hardness of the intermediate rubber (9) is 50 degrees to 70 degrees.

4. A tyre according to any one of claims 1-3 characterised in that the breaker (8) includes at each edge a rubber reinforcing layer (15) which cover each end of the first belt layer (7)

5. A tyre according to any of claims 1 to 4 characterised in that the rubber tread (17) includes base rubbers (20) having a low heat generation property, which are disposed radially outside the breaker ends over the edges of the first (7) and second (10) belt layers.

**Revendications**

1. Pneumatique pour véhicule, comportant deux tringles (4) de talon disposées chacune dans un talon du pneumatique, une carcasse (5) disposée entre les talons, les extrémités de la carcasse étant repliées autour des talons, une bande de roulement (17) placée sur la carcasse, et une nappe sommet (8) disposée entre la carcasse et la bande de roulement et comprenant une première couche (7) de ceinture, une seconde couche (10) de ceinture disposée radialement à l'extérieur de la première couche de ceinture, et un organe intermédiaire (9) de caoutchouc disposé entre la première et la seconde couche de ceinture, la première coucha (7) de ceinture comprenant plusieurs nappes (6) formées de câblés pratiquement inextensibles, la seconde couche (10) de ceinture comprenant au moins une nappe de câblés organiques pratiquement inextensibles formés de fibres d'un polyamide aromatique, caractérisé en ce que l'organe intermédiaire (9) de caoutchouc a un module complexe d'élasticité ($|E^*|$) compris entre 2.10$^6$ et 1,5.10$^7$ Pa (20 et 150 kg/cm$^2$) et une compliance de perte ($E''/|E^*|^2$) de 0,4.10$^{-4}$ à 2,0.10$^{-4}$ cm$^2$/N (0,4.10$^{-3}$ à 2,0.10$^{-3}$ cm$^2$/kg), ces deux paramètres étant mesurés dans les conditions suivantes : une déformation initiale de 10 %, une onde sinusoïdale à 10 Hz ayant une amplitude de 2 % et une température de 60 °C.

2. Pneumatique selon la revendication 1, caractérisé en ce que l'épaisseur (H) de l'organe intermédiaire (9) de caoutchouc est comprise entre 4 et 20 % de l'épaisseur (B) de la partie (2) de bande roulement du, pneumatique à l'équateur (C) du pneumatique.

3. Pneumatique selon la revendication 1 ou 2, caractérisé en ce que la dureté Shore A de l'organe intermédiaire (9) de caoutchouc est comprise entre 50 et 70°.

4. Pneumatique selon l'une quelconque des revendications 1 à 3, caractérisé en ce que la nappe sommet

EP 0 280 442 B1

(8) comporte, à chaque bord, une couche (15) d'armature de caoutchouc qui recouvre les deux extrémités de la première couche (7) de ceinture.

5. Pneumatique selon l'une quelconque des revendications 1 à 4, caractérisé en ce que la bande de roulement (17) de caoutchouc comprend des organes de base (20) de caoutchouc ayant des propriétés de faible dégagement de chaleur, et disposés radialement à l'extérieur des extrémités de la nappe sommet au-dessus des bords de la première (7) et de la seconde (10) couche de ceinture.

**Patentansprüche**

1. Fahrzeugreifen, welcher umfaßt ein Paar Wulstkerne (4), die jeweils einzeln in jedem Wulst des Reifens angeordnet sind, eine sich zwischen den Wulsten erstreckende Karkasse (5), von der jedes Ende um den jeweiligen Wulstkern nach oben geschlagen ist, einen an der Karkasse angeordneten Laufstreifen (17) und einen zwischen der Karkasse und dem Laufstreifen angeordneten Gürtel (8), der umfaßt eine erste Gürtellage (7), eine zweite radial außerhalb der ersten Gürtellage angeordnete Gürtellage (10), und einen zwischen der ersten Gürtellage und der zweiten Gürtellage angeordneten Zwischengummi (9), wobei die erste Gürtellage (7) eine Vielzahl von Schichten (6) aus im wesentlichen undehnbaren Korden umfaßt, die zweite Gürtellage (10) mindestens eine Schicht aus im wesentlichen undehnbaren organischen Korden aus aromatischen Polyamidfasern umfaßt, dadurch gekennzeichnet, daß der Zwischengummi (9) einen komplexen Elastizitätsmodul ($|E^*|$) von 20 bis 50 kp/cm$^2$ und eine Verlust-Nachgiebigkeit ($E''/|E^*|^2$) von 0,4 bis 2,0 x 10 cm$^2$/kp besitzt, beide gemessen unter folgenden Bedingungen: 10% Anfangs-Zugspannung, 10 Hz Sinuswelle mit 2% Amplitude und bei einer Temperatur von 60°C.

2. Reifen nach Anspruch 1, dadurch gekennzeichnet, daß die Dicke (H) des Zwischengummis (9) innerhalb von 4% bis 20% der Dicke (B) des Laufstreifenteils (2) des Reifens am Reifenäquator (C) liegt.

3. Reifen nach Anspruch 1 oder 2, dadurch gekennzeichnet, daß die Shore-A-Härte des Zwischengummis (9) 50° bis 70° beträgt.

4. Reifen nach einem der Ansprüche 1 bis 3, dadurch gekennzeichnet, daß der Gürtel (8) an jeder Kante eine Gummiverstärkungsschicht (15) enthält, die jedes Ende der ersten Gürtellage (7) bedeckt.

5. Reifen nach einem der Ansprüche 1 bis 4, dadurch gekennzeichnet, daß der Gummilaufstreifen (17) Grundgummis (20) mit der Eigenschaft niedriger Wärmeerzeugung enthält, die radial außerhalb der Gürtelenden über den Kanten der ersten (7) und der zweiten (10) Gürtelschicht angeordnet sind.

6

FIG.1

FIG.2